# EUROPÄISCHE PATENTSCHRIFT

(11) **EP 2 875 585 B1**
(45) Veröffentlichungstag und Bekanntmachung des Hinweises auf die Patenterteilung: **23.05.2018**
(21) Anmeldenummer: 13739943.2
(22) Anmeldetag: 11.07.2013
(51) Int. Cl.: H04B 1/00, H04B 1/40

(54) **SCHALTUNGSANORDNUNG FÜR EINE MOBILFUNKEINHEIT EINES KRAFTWAGENS, KRAFTWAGEN UND VERFAHREN ZUM BETREIBEN DER SCHALTUNGSANORDNUNG**
CIRCUIT ARRANGEMENT FOR A MOBILE COMMUNICATIONS UNIT OF A MOTOR VEHICLE, MOTOR VEHICLE AND METHOD FOR OPERATING A CIRCUIT ARRANGEMENT
ENSEMBLE DE CIRCUITS POUR UNE UNITÉ DE TÉLÉCOMMUNICATION MOBILE D'UN VÉHICULE AUTOMOBILE, VÉHICULE AUTOMOBILE ET PROCÉDÉ POUR LE FONCTIONNEMENT DE L'ENSEMBLE DE CIRCUITS

(30) Priorität: 21.07.2012 DE 102012014547
(43) Veröffentlichungstag der Anmeldung: 27.05.2015
(73) Patentinhaber: Audi AG, 85045 Ingolstadt (DE)
(72) Erfinder: EHRENTRAUT, Herbert, 92339 Beilngries (DE)
(74) Vertreter: Schuster, Simon
(86) Internationale Anmeldenummer: PCT/EP2013/002044
(87) Internationale Veröffentlichungsnummer: WO 2014/015951

(56) Entgegenhaltungen:
- EP-A1- 2 270 673
- WO-A1-2005/125023
- CN-A- 101 707 797
- US-A1- 2012 071 086

## Beschreibung

Die Erfindung betrifft eine Schaltungsanordnung für eine Mobilfunkeinheit eines Kraftwagens mit zwei Mobilfunkmodulen, die für eine Mobilfunkübertragung gemäß unterschiedlichen Mobilfunkstandards ausgebildet sind. Zu der Erfindung gehört auch ein Kraftwagen mit einer die erfindungsgemäße Schaltungsanordnung aufweisenden Mobilfunkeinheit. Schließlich betrifft die Erfindung auch ein Verfahren zum Betreiben der erfindungsgemäßen Schaltungsanordnung.

In einem Kraftwagen, beispielsweise einem Personenkraftwagen, sind Telefonie und Internetanbindung nur über eine Funkverbindung zu einem Mobilfunknetz möglich. Eine in dem Kraftwagen zu diesem Zweck bereitgestellte Mobilfunkeinheit koppelt hierbei einen Steuerprozessor des Kraftwagens, beispielsweise einen Prozessor eines Infotainmentsystems, mit dem Antennensystem. Die Mobilfunkeinheit erzeugt beim Senden die analogen Mobilfunksignale aus den von dem Steuerprozessor ausgegebenen Nutzdaten (Sprachdaten oder andere digitale Daten) bzw. extrahiert beim Empfang Nutzdaten aus Mobilfunksignalen, die sie über das Antennensystem empfängt, und übergibt sie an den Steuerprozessor. Die Umwandlung zwischen den analogen Mobilfunksignalen und den digitalen Nutzdaten erfolgt durch so genannte Mobilfunkmodule, die unter der Bezeichnung GSM-Modul (GSM - Global System for Mobile Communications), UMTS-Modul (UMTS - Universal Mobile Telecommunications System) bzw. LTE-Modul (LTE - Long-Term-Evolution), im Handel erhältlich sind. Beim Entwickeln einer Mobilfunkeinheit für einen Kraftwagen einer bestimmten Serie muss festgelegt werden, für welche der Mobilfunkstandards, also etwa GSM, UMTS oder LTE, eine Mobilfunkübertragung durch die Mobilfunkeinheit ermöglicht werden soll. Jüngere Mobilfunkstandards weisen hier zwar den Vorteil auf, dass sie voraussichtlich länger genutzt werden können. Nachteilig kann aber sein, dass noch nicht alle Datendienste zuverlässig implementiert sind. So ist beispielsweise im Zusammenhang mit dem Mobilfunkstandard LTE bekannt, dass der im LTE vorgesehene Standard für Sprachübertragung VoLTE derzeit nicht von den Mobilfunknetzen unterstützt wird. Zur Übertragung der Sprache muss ein LTE Modul auf einen älteren Mobilfunkstandard schalten. Ein im Vergleich älterer Mobilfunkstandard bietet dagegen den Vorteil, dass die erhältlichen Systeme etabliert und erprobt sind und damit zuverlässig funktionieren. Bei langjähriger Nutzung einer Mobilfunkeinheit mit einem älteren Mobilfunkstandard kann es sich allerdings herausstellen, dass die Kunden die Mobilfunkeinheit als veraltet empfinden, da sich mittlerweile jüngere Mobilfunkstandards etabliert haben.

Im Zusammenhang mit Mobilfunkgeräten, wie etwa Mobiltelefonen, ist die Bereitstellung eines Dualmodus bekannt, bei dem Sprachdaten oder andere Nutzdaten beispielsweise auf UMTS oder GSM übertragen werden können. Ein solches Mobilfunkgerät weist dabei zwei Mobilfunkmodule auf, beispielsweise ein GSM-Modul und ein UMTS-Modul. Für einen Verbindungsaufbau zur Nutzdatenübertragung (Sprachdaten oder andere Nutzdaten gleichermaßen) wird zunächst versucht, über das Mobilfunkmodul mit dem jüngeren Mobilfunkstandard, also das UMTS-Modul, eine Verbindung aufzubauen. Ist eine keine UMTS-Anbindung möglich, wird auf das Mobilfunkmodul mit dem älteren Mobilfunkstandard, also das GSM-Modul, umgeschaltet und dieses für den Verbindungsaufbau genutzt.

Das Dokument WO 2005/125023 A1 offenbart ein Radio mit einem analogen Radiomodul und einem digitalen Radiomodul, die über eine elektrische Schnittstelle miteinander verbunden sind. Ein Prozessor des analogen Radiomoduls steuert die niederfrequente Ausgabe an einen Signalausgang.

In dem Dokument US 2012/0071086 A1 ist ein zweiteiliger USB-Stick beschrieben, dessen zwei Teile sich voneinander trennen lassen, wobei dann immer noch eine Funkverbindung zwischen diesen beiden Teilen durch Transceiver bereitgestellt ist, von denen jeweils einer in einem der Teile des USB-Sticks angeordnet ist. Durch Anschließen jeweils eines Teils des USB-Sticks an einen Computer lässt sich zwischen den beiden Computern eine Kommunikationsverbindung bereitstellen.

In dem Dokument CN 101 707 797 A ist ein mobiles Funkterminal mit zwei in Kaskade geschalteten Funkmodulen beschrieben, die über ein Standard-Interface miteinander verschaltet sind, wobei ausgehend von einem USB-Anschluss eines der Funkmodule hinter das andere Funkmodul geschaltet ist. Jedes der Funkmodule weist eine eigene Antenne auf.

In dem Dokument EP 2 270 673 A1 ist eine Schaltungsanordnung mit zwei Mobilfunkmodulen gezeigt, von denen eines ein LTE-Funkmodul und das andere ein CDMA-Funkmodul ist. Ausgehend von einem USB-Anschluss für einen Computer ist das LTE-Funkmodul dem CDMA-Funkmodul vorgeschaltet.

Eine Aufgabe der vorliegenden Erfindung ist es, für einen Kraftwagen eine Mobilfunkeinheit bereitzustellen, die mit geringem Entwicklungs- und Schaltungsaufwand eine zuverlässige Mobilfunkübertragung für Sprachdaten und andere digitale Nutzdaten ermöglicht.

Diese Aufgabe wird durch die Gegenstände der unabhängigen Patentansprüche gelöst. Vorteilhafte Weiterbildungen der Erfindung sind durch die Unteransprüche gegeben.

Die erfindungsgemäße Schaltungsanordnung umfasst zwei Mobilfunkmodule für eine Mobilfunkübertragung gemäß zweier unterschiedlicher Mobilfunkstandards. Bei einem der Mobilfunkmodule, hier als das erste Mobilfunkmodul bezeichnet, handelt es sich um ein UMTS-Modul oder ein LTE-Modul. Das UMTS-Modul kann noch gleichzeitig GSM unterstützen, das LTE Modul kann gleichzeitig noch UMTS und GSM unterstützen. Hierzu werden die Bezeichnungen UMTS/GSM-Modul bzw. LTE/UMTS/GSM-Modul eingeführt. Das zweite Mobilfunkmodul ist dagegen bevorzugt ein GSM-Modul. Jedes der Mobilfunkmodule weist in an sich bekannter Weise eine Kommunikationsschnittstelle zum Austauschen von Steuer- und Nutzdaten auf. Bei der Kommunikationsschnittstelle handelt es sich um diejenigen Kontakte und die mit diesen verknüpften Logik des jeweiligen Mobilfunkmoduls, über die das Mobilfunkmodul mit lokalen Geräten Nutzdaten austauscht und das Mobilfunkmodul von lokalen Geräten gesteuert werden kann. Zum Anschließen der Schaltungsanordnung an die übrige Bordelektronik weist die Schaltungsanordnung einen elektrischen Anschluss auf. Nur die Kommunikationsschnittstelle des ersten Mobilfunkmoduls ist dabei mit diesem Anschluss verbunden. Mit anderen Worten ist es einer externen Prozessoreinheit, beispielsweise ein Steuerprozessor eines Infotainmentsystems des Kraftwagens, nur möglich, über den elektronischen Anschluss mit der Kommunikationsschnittstelle des ersten Mobilfunkmoduls Steuer- und Nutzdaten direkt auszutauschen. Bei der erfindungsgemäßen Schaltungsanordnung ist dagegen das zweite Mobilfunkmodul nicht direkt mit dem elektrischen Anschluss der Schaltungsanordnung verbunden. Stattdessen weist das erste Mobilfunkmodul eine Zusatzschnittstelle auf, über welche das erste Mobilfunkmodul mit der Kommunikationsschnittstelle des zweiten Mobilfunkmoduls elektrisch verbunden ist. Mit anderen Worten befindet sich das erste Mobilfunkmodul schaltungstechnisch zwischen dem elektrischen Anschluss und dem zweiten Mobilfunkmodul. Die erwähnte externe Prozessoreinheit kann also nur indirekt über das erste Mobilfunkmodul mit dem zweiten Mobilfunkmodul kommunizieren.

Die erfindungsgemäße Schaltungsanordnung weist den Vorteil auf, dass der elektrische Anschluss zum Anschließen der Schaltungsanordnung an die Fahrzeugelektronik verhältnismäßig wenige Signalleitungen aufweisen muss, nämlich nur diejenigen für den Austausch von Steuer- und Nutzdaten mit einer einzigen Kommunikationsschnittstelle. Dennoch ist bei der erfindungsgemäßen Schaltungsanordnung die Mobilfunkübertragung über zwei unterschiedliche Mobilfunkstandards ermöglicht.

Die erfindungsgemäße Schaltungsanordnung ermöglicht den Betrieb beider Mobilfunkmodule mit einem Antennensystem, wie es für den Betrieb eines einzelnen Mobilfunkmoduls mit Antennendiversität vorgesehen ist. Ein solches Antennensystem umfasst in der Regel eine Hauptantenne und eine Nebenantenne, wobei die Hauptantenne eine für eine Funkverbindung günstigere Übertragungscharakteristik aufweist, insbesondere eine geringere Direktivität. Die Hauptantenne ist hierzu in der Regel auf einem Dach des Kraftwagens angeordnet. Die Nebenantenne zum Ermöglichen der Antennendiversität kann dagegen an einem abgeschirmteren Ort, beispielsweise in der Stoßstange, angeordnet werden, da das Anordnen zweier Antennen auf dem Dach in der Regel nicht erwünscht ist. Um nun für beide Mobilfunkmodule die Nutzung der Hauptantenne zu ermöglichen, sieht eine Ausführungsform der Schaltungsanordnung eine Schalteinrichtung vor, durch die für eine Funksignalübertragung in einem ersten Schaltzustand das erste Mobilfunkmodul mit einem Hauptantennenanschluss der Schaltungsanordnung und währenddessen das zweite Mobilfunkmodul mit einem Nebenantennenanschluss der Schaltungsanordnung und in einem zweiten Schaltzustand umgekehrt das erste Mobilfunkmodul mit dem Nebenantennenanschluss und das zweite Mobilfunkmodul mit dem Hauptantennenanschluss gekoppelt ist. Während also das zweite Mobilfunkmodul, etwa das GSM-Modul, keine Telefoniedaten überträgt, sondern lediglich Kontrolldaten mit einer GSM-Mobilfunkstation austauscht, kann hierzu die Schalteinrichtung im ersten Schaltzustand belassen werden und der Austausch der Kontrolldaten über die Nebenantenne erfolgen. Zugleich steht für das erste Mobilfunkmodul die vollständige Antennendiversität zur Verfügung, da das erste Mobilfunkmodul sowohl die Hauptantenne als auch (über eine weitere Antennenleitung) die Nebenantenne für einen Empfang nutzen kann, ohne das zweite Mobilfunkmodul zu stören. Bei Aktivierung des zweiten Mobilfunkmoduls, etwa im Zusammenhang mit einem Rufaufbau oder bei einem eintreffenden Anruf, kann dann das zweite Mobilfunkmodul mit der Hauptantenne gekoppelt werden, indem die Schalteinrichtung in den zweiten Schaltzustand geschaltet wird. Währenddessen kann weiterhin das erste Mobilfunkmodul die Nebenantenne für einen Empfang oder ein Senden mit reduzierter Bandbreite weiter nutzen.

Der erfindungsgemäße Kraftwagen weist entsprechend eine Mobilfunkeinheit auf, die eine Ausführungsform der erfindungsgemäßen Schaltungsanordnung umfasst. Hierbei kann in der beschriebenen Weise ein für einen Datenaustausch mit einem Mobilfunknetzwerk eingerichteter Steuerprozessor des Kraftwagens, also z.B. der Steuerprozessor des Infotainmentsystems, über den elektrischen Anschluss der Schaltungsanordnung mit der Kommunikationsschnittstelle des ersten Mobilfunkmoduls gekoppelt sein. Der Steuerprozessor muss hierbei in vorteilhafter Weise lediglich für eine Kommunikation mit dem ersten Mobilfunkmodul ausgelegt sein.

Um eine Nutzung des zweiten Mobilfunkmoduls durch den Steuerprozessor zu ermöglichen, ist gemäß dem dritten Aspekt der Erfindung, dem erfindungsgemäßen Verfahren, vorgesehen, durch das erste Mobilfunkmodul an seiner Kommunikationsschnittstelle einen Steuerbefehl zu empfangen, wie er beispielsweise von dem Steuerprozessor für einen Rufaufbau (Telefonie) oder einen Verbindungsaufbau für eine Internetverbindung an die Kommunikationsschnittstelle des ersten Mobilfunkmoduls übertragen werden kann. Gemäß einem zweiten Schritt des Verfahrens untersucht das erste Mobilfunkmodul den empfangenen Steuerbefehl daraufhin, ob er für das erste oder das zweite Mobilfunkmodul bestimmt ist. Im zweiten Fall, wenn also eine Verbindung über das zweite Mobilfunkmodul aufgebaut werden soll, steuert dann das erste Mobilfunkmodul über seine Zusatzschnittstelle das zweite Mobilfunkmodul gemäß dem empfangenen Steuerbefehl an. Hierdurch wird dann der Rufaufbau bzw. Verbindungsaufbau durch das zweite Mobilfunkmodul eingeleitet.

Ob ein bestimmter Steuerbefehl für das erste oder das zweite Mobilfunkmodul bestimmt ist, kann auf unterschiedliche Weise ermittelt werden. Zum einen kann der externe Steuerprozessor dazu eingerichtet sein, entsprechende Signale an das erste Mobilfunkmodul zu senden, um hierdurch ausdrücklich anzuzeigen, welches Mobilfunkmodul den Steuerbefehl ausführen soll.

Ein weiterer Vorteil ergibt sich allerdings, wenn durch das erste Mobilfunkmodul selbst entschieden wird, ob es den empfangenen Steuerbefehl selbst ausführen soll oder ob es die Ausführung des Steuerbefehls durch das zweite Mobilfunkmodul veranlassen soll. Dann muss nämlich die Steuersoftware des externen Steuerprozessors nicht für eine Steuerung zweier unterschiedlicher Mobilfunkmodule ausgelegt sein. Um eine solche selbständige Zuordnungen eines Steuerbefehls zum ersten oder zweiten Mobilfunkmodul durch das erste Mobilfunkmodul zu ermöglichen, kann durch das erste Mobilfunkmodul beispielsweise überprüft werden, mittels welchem der beiden Mobilfunkmodule voraussichtlich eine Funkverbindung mit besserem Signal-zu-Rausch-Verhältnis aufgebaut werden kann. Genauso kann festgelegt sein, dass prinzipiell ein Rufaufbau für Telefonie durch das zweite Mobilfunkmodul, also insbesondere ein GSM-Modul erfolgen soll, während digitale Nutzdaten, die sich von Sprachsignaldaten unterscheiden, prinzipiell über das erste Mobilfunkmodul, also insbesondere das UMTS-Modul oder das LTE-Modul, erfolgen soll. Vorzugsweise weist das erste Mobilfunkmodul eine Steuereinrichtung auf, die dazu eingerichtet, die Steuerbefehle zum Steuern des zweiten Mobilfunkmoduls selbst zu erzeugen und über die Zusatzschnittstelle an das zweite Mobilfunkmodul zu übertragen. Hierdurch ergibt sich der Vorteil, dass die externe Prozessoreinheit nicht für eine Steuerung des zweiten Mobilfunkmoduls ausgelegt sein muss.

Um einen Austausch der eigentlichen Nutzdaten, also der Sprachdaten oder der nicht-sprachbezogenen digitalen Daten, zwischen dem zweiten Mobilfunkmodul und der externen Prozessoreinheit zu ermöglichen, kann das erfindungsgemäße Verfahren weitergebildet werden, indem das erste Mobilfunkmodul dazu ausgelegt wird, Nutzdaten zwischen seiner Kommunikationsschnittstelle und seiner Zusatzschnittstelle zu übertragen, also die Nutzdaten durchzuschleifen. Hierbei kann eine direkte Übertragung oder eine Übertragung mittels eines Puffers vorgesehen sein. Beispielsweise kann so ermöglicht werden, dass ein digitales Sprachsignal, beispielsweise ein PCM-Signal (PCM - Pulse Code Modulation) zwischen der externen Prozessoreinheit und dem zweiten Mobilfunkmodul ausgetauscht wird. Bei der Übertragung durch das erste Mobilfunkmodul kann dabei auch eine Signalverarbeitung durch das erste Mobilfunkmodul durchgeführt werden.

Die Übertragung der Nutzdaten zwischen der Kommunikationsschnittstelle des ersten Mobilfunkmoduls und seiner Zusatzschnittstelle wird zweckmäßigerweise durch eine Durchleiteinrichtung ermöglicht, die einander entsprechende Anschlüsse der Kommunikationsschnittstelle und der Zusatzschnittstelle beispielsweise unmittelbar elektrisch miteinander verbinden kann oder aber auch beispielsweise mittels einer Zwischenpufferung die Übertragung von Daten realisieren kann. Die Übertragung von Audiodaten kann z.B. erfolgen, indem die Audioanschlüsse der beiden Kommunikationsschnittstellen über die Zwischenschnittstelle gekoppelt werden.

Bisher erfordert der Betrieb zweier unabhängiger Mobilfunkmodule auch die Bereitstellung zweier SIM (SIM - Subscriber Identity Modul, Teilnehmer-Identitätsmodul). In diesem Zusammenhang sieht eine Weiterbildung der erfindungsgemäßen Schaltungsanordnung vor, dass das erste Mobilfunkmodul dazu ausgelegt ist, über einen Anschluss seiner Kommunikationsschnittstelle Identifikationsdaten eines Benutzers von einem SIM seriell zu empfangen. Hierdurch ist dann die Übertragung der Identifikationsdaten über eine einzelne elektrische Schnittstelle möglich. Beispielsweise kann die Übertragung gemäß dem USB-Standard (USB - Universal Serial Bus) erfolgen. Hier kann insbesondere die im Rahmen des USB-Standards bereitgestellte Spezifikation CDC/ACM (Communication Device Class / Abstract Control Model) genutzt werden.

Bevorzugt sind die beiden Mobilfunkmodule bei der erfindungsgemäßen Schaltungsanordnung auf einer gemeinsamen Einsteckkarte angeordnet. Dann lässt sich die erfindungsgemäße Schaltungsanordnung beispielsweise in einer herkömmlichen Steuereinheit einbauen, in welcher ein Steckplatz für eine Einsteckkarte mit nur einem einzelnen Mobilfunkmodul bereitgestellt ist.

Im Folgenden wird die Erfindung noch einmal genauer anhand eines konkreten Ausführungsbeispiels erläutert. Dazu zeigt:
- Fig. 1: eine schematische Darstellung einer bevorzugten Ausführungsform des erfindungsgemäßen Kraftwagens; und

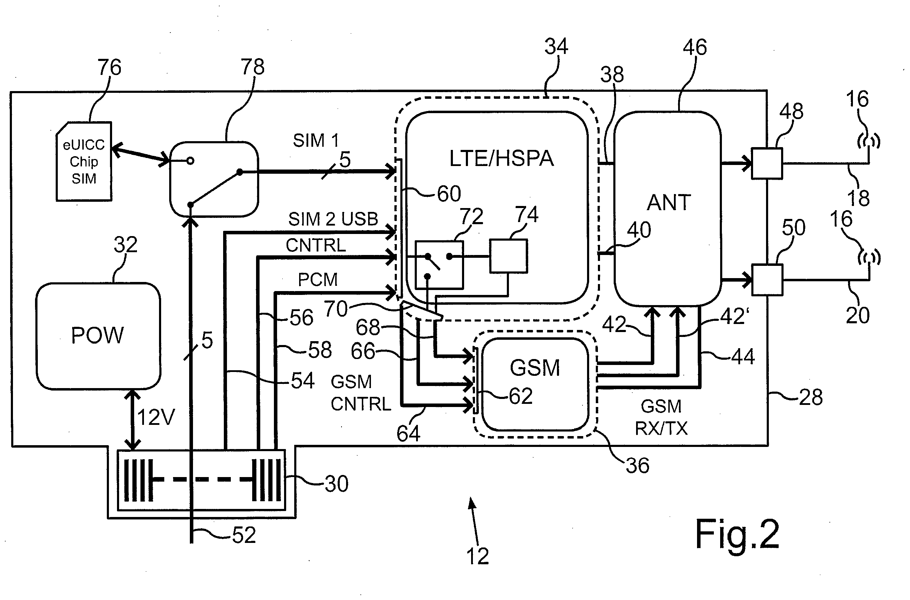

- Fig. 2: eine schematische Darstellung einer Mobilfunkeinheit, wie sie in dem Kraftwagen von Fig. 1 eingebaut sein kann.

Bei dem im folgenden erläuterten Beispiel stellen die beschriebenen Komponenten des Kraftwagens bzw. der Mobilfunkeinheit jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

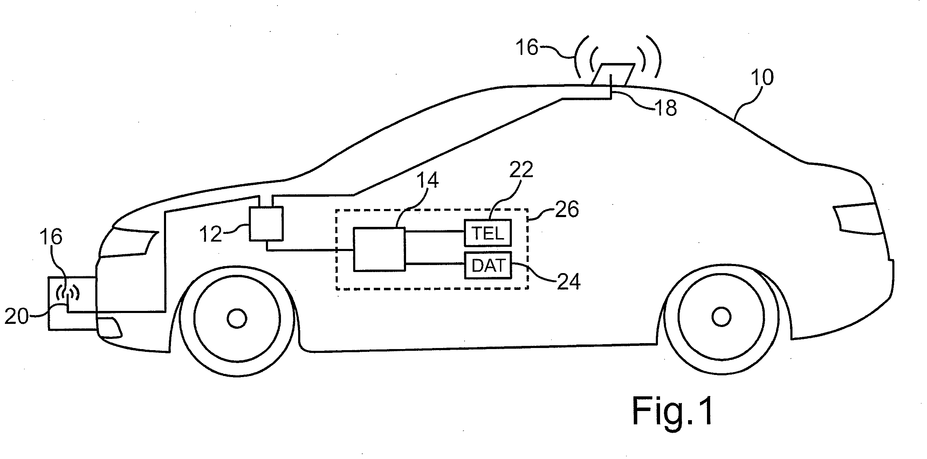

In Fig. 1 ist ein Kraftwagen 10 gezeigt, der beispielsweise ein Personenkraftwagen sein kann. In den Kraftwagen 10 ist eine Mobilfunkeinheit 12 ein sowie ein Steuergerät 14 gebaut. Die Mobilfunkeinheit 12 kann digitale Daten als Mobilfunksignal 16 über eine Hauptantenne 18 und gegebenenfalls eine Nebenantenne 20 aussenden bzw. über die Antennen 18, 20 empfangene Mobilfunksignale demodulieren und die in den Mobilfunksignalen enthaltenen Nutzdaten extrahieren.

Die Mobilfunkeinheit 12 ermöglicht also eine Wandlung zwischen den analogen Mobilfunksignalen der Antenne 18, 20 und den zwischen der Mobilfunkeinheit 12 und dem Steuergerät 14 ausgetauschten digitalen Daten. Bei den digitalen Daten kann es sich z.B. um Sprachdaten eines Telefongeräts 22 oder um digitale Daten eines Computers 24 handeln, beispielsweise eines Bordcomputers zum Lesen von Emails oder zum Betrachten von Internetseiten. Das Steuergerät 14, das Telefongerät 22 und der Computer 24 können Bestandteil eines Infotainmentsystems 26 sein. Bei dem Telefongerät 22 kann es sich auch um ein fahrzeugfremdes Gerät handeln, dass beispielsweise über eine Bluetooth-Anbindung mit dem Steuergerät 14 kommuniziert. Auch bei dem Computer 24 kann es sich um ein fahrzeugfremdes Gerät, beispielsweise ein Laptop handeln, das über eine Kabelverbindung oder eine Funkverbindung (WLAN - Wireless Local Area Network) mit dem Steuergerät 14 kommuniziert.

Im Folgenden sind der Aufbau und die Funktionsweise der Mobilfunkeinheit 12 näher erläutert.

Die Mobilfunkeinheit 12 kann als Einsteckkarte 28 realisiert sein, die in einem (nicht dargestellten) Einsteckplatz eines Steuergeräts des Kraftwagens 10 eingesteckt sein kann. Die Mobilfunkeinheit 12 weist einen elektrischen Anschluss 30 mit mehreren elektrischen Kontakten auf, über welche Signale zwischen der Mobilfunkeinheit 12 und dem Steuergerät 14 ausgetauscht werden. Über den Anschluss 30 wird auch eine Spannungsversorgung 32 mit der Bordnetzspannung (beispielsweise 12 V) des Kraftwagens 10 versorgt. Die Mobilfunkeinheit 12 weist zwei Mobilfunkmodule auf, nämlich im vorliegenden Beispiel ein LTE-Modul 34 und ein GSM-Modul 36. Das LTE-Modul 34 kann noch zusätzlich die Standards UMTS und GSM unterstützen. Anstelle des LTE-Moduls 34 kann die Mobilfunkeinheit 12 auch ein UMTS-Modul oder ein HSPA-Modul aufweisen. Das UMTS oder HSPA Modul kann noch zusätzlich den Standard GSM unterstützen. Das LTE-Modul 34 wird in diesem Beispiel zur Übertragung von digitalen Nutzdaten des Computers 34 und weiterer Computer des Kraftwagens 10 bzw. für den Empfang von Nutzdaten für diese Geräte verwendet. Das GSM-Modul 36 wird für die Bereitstellung von Telefonverbindungen genutzt. Es kann auch vorgesehen sein, dass das GSM-Modul 36 nur dann für Telefonie genutzt wird, wenn erkannt wird, dass diese Funktion momentan nicht durch das LTE-Modul 34 bereitgestellt werden kann.

Jedes Mobilfunkmodul 34, 36 weist ein Blechgehäuse zur Abschirmung von Hochfrequenzstrahlung auf, in welchem sich digitale Schaltkreise und Analogverstärker befinden, um an analogen Ausgängen 38, 40, 44 Antennensignale für die Antennen 18, 20 auszugeben bzw. von den Antennen 18, 20 entsprechende Antennensignale zu empfangen. Die analogen Ausgänge 38, 40, 44 sind über eine Umschalteinrichtung 46 mit Antennenanschlüssen 48, 50 für die Antennen 18 bzw. 20 verbunden. Die Umschalteinrichtung 46 weist steuerbare Schalter auf, die es in einer Schaltstellung ermöglichen, die analogen Ausgänge 38, 40 des LTE-Moduls 34 jeweils mit einem der Antennenanschlüsse 48, 50 zu verbinden. In dieser Schalterstellung nutzt das LTE-Modul 34 beide Antennen 18, 20 für den Empfang von Mobilfunksignalen 16 über Antennendiversität. In dieser Schalterstellung ist der analoge Anschluss 44 des GSM-Moduls 36 mit der Nebenantenne 20 verbunden, über die das GSM-Modul 36 Kontrolldaten von umliegenden GSM-Mobilfunkstationen empfängt. In einer zweiten Schalterstellung der Umschalteinrichtung 36 sind die Analoganschlüsse 38, 40 des LTE-Moduls 34 mit der Nebenantenne 20 verbunden. In dieser Schalterstellung nutzt das LTE-Modul 34 ausschließlich die Antenne 20 für das Senden und Empfangen. Währenddessen kann der Analoganschluss 44 des GSM-Moduls 36 mit der Hauptantenne 18 verbunden sein. Bei dem Digitalanschluss 42 kann es sich um einen Ausgang für die Anzeige eines GSM-Bursts handeln. Bei der Aussendung eines GSM Bursts kann beispielsweise die Umschalteinrichtung 46 Schutzmaßnahmen gegen eine Übersteuerung der Analoganschlüsse 38, 40 einleiten. Der Analoganschluss 44 ist für allgemeine Sende- und Empfangsübertragung. Das GSM-Modul 36 kann hierdurch die besseren Sende- und Empfangseigenschaften der Hauptantenne 18 für eine Übertragung von Telefoniedaten nutzen. Der Digitalanschluss 42' dient zur Umschaltung der Analogen Anschlüsse 38, 40, 44 auf die analogen Anschlüsse 48, 50.

Die Umschalteinrichtung 46 umfasst auch elektrische Bauelemente für eine Impedanzanpassung zwischen den Analoganschlüssen 38 bis 44 und den Antennen 18, 20.

Obwohl die Übertragung von digitalen Nutzdaten einerseits und Telefoniedaten andererseits bei der Mobilfunkeinheit 12 über die zwei unterschiedlichen Mobilfunkmodule 34, 36 erfolgen kann, weist der Anschluss 30 lediglich Verbindungskontakte für einen Datenaustausch zwischen dem Steuergerät 14 und dem Mobilfunkmodul 34 auf. Weitere Datenleitungen für einen Datenaustausch mit dem GSM-Modul 36 sind bei dem Anschluss 30 nicht nötig.

Der Anschluss 30 ist unter anderem über fünf physikalische Leitungen, hier als SIM-Leitungen 52 bezeichnet, eine USB-Leitung 54 für eine serielle Datenübertragung, eine Steuerleitung 56 und eine Audioleitung 58 mit Anschlusskontakten des LTE-Moduls 34 verbunden. Die Anschlusskontakte bilden zusammen eine Kommunikationsschnittstelle 60 des LTE-Moduls 34.

Das GSM-Modul 36 weist eine vergleichbare Kommunikationsschnittstelle 62 auf, wie es an sich aus dem Stand der Technik bekannt ist. Die Anschlusskontakte der Kommunikationsschnittstelle 62 sind nicht unmittelbar mit den Anschlusskontakten des Anschlusses 30 verbunden. Die Kommunikationsschnittstelle 62 ist stattdessen mit weiteren Anschlusskontakten des LTE-Moduls 34 zumindest über eine Steuerleitung 64, eine Audioleitung 66 und SIM-Leitungen 68 verbunden. Zum Anschließen der Leitungen 64, 66, 68 an das LTE-Modul 34 können Anschlusskontakte des LTE-Moduls 34 verwendet werden, die über eine entsprechende Programmierung des LTE-Moduls 34 frei konfiguriert werden können. Die genutzten Anschlusskontakte bilden insgesamt eine Zusatzschnittstelle 70 des LTE-Moduls 34.

Durch eine Steuersoftware des LTE-Moduls 34 kann eine Durchleiteinrichtung 72 gebildet sein, durch welche Daten wahlweise entweder zwischen der Kommunikationsschnittstelle 60 und einer Verarbeitungseinheit 74 des LTE-Moduls 34 oder zwischen der Kommunikationsschnittstelle 60 und der Zusatzschnittstelle 70 übertragen werden können. In letzterem Fall ist es hierdurch beispielsweise möglich, Sprachdaten, die von dem Telefongerät 22 über das Steuergerät 14 beispielsweise als PCM-Daten auf der Audioleitung 58 an das LTE-Modul 34 übertragen werden, über die Audioleitung 66 an das GSM-Modul 36 weiterzuleiten. Genauso können Steuerbefehle des Steuergeräts 14 über die Kontrollleitung 56 auf die Kontrollleitung 64 umgeleitet werden.

Im Zusammenhang mit einer Steuerung des GSM-Moduls 36 oder auch mit einer Verarbeitung der Audiodaten kann auch vorgesehen sein, dass durch die Verarbeitungseinheit 74 unmittelbar eine eigenständige Ausgabe von GSM-Steuerbefehlen oder von verarbeiteten Audiodaten über die Zwischenzusatzschnittstelle 70 an das GSM-Modul 36 erfolgt.

Für einen Betrieb der Mobilfunkmodule 34, 36 sind Identifikationsdaten des Benutzers aus jeweils einem SIM nötig (SIM1 und SIM2). Die beiden SIM sind außerhalb der Mobilfunkeinheit 12 auf zumindest einer SIM-Karte (UICC - Universal Integrated Circuit Card) angeordnet, die sich jeweils in einem Steckplatz im Kraftwagen 10 befinden kann. Der Anschluss 30 weist lediglich die fünf physikalischen Leitungen der SIM-Leitungen 52 auf, um die Daten des SIM1 zur Kommunikationsschnittstelle 60 des LTE-Moduls 34 weiterzuleiten. Die Identifikationsdaten des zweiten SIM, SIM2, können an das LTE-Modul 34 übertragen werden, ohne dass hierfür weitere fünf Leitungen nötig sind. Die USB-Leitung 54 ist als serielle Kommunikationsschnittstelle beispielsweise mittels eines CDC-ACM-Treibers des LTE-Moduls 34 für einen Empfang von Identifikationsdaten des zweiten SIM (SIM2) in Form von seriell übertragenen Daten ausgelegt. Das LTE-Modul 34 ist dazu ausgelegt, die über die USB-Leitung 54 empfangenen Identifikationsdaten über die SIM-Leitungen 68 an das GSM-Modul 36 zu übertragen. Die SIM-Leitungen 68 können beispielsweise wieder die gewohnten fünf physikalischen Leitungen für die standardmäßige Übertragung von Identifikationsdaten einer SIM-Karte sein.

Zur Benutzung von LTE-Modul 34 und GSM-Modul 36 müsste eigentlich jeweils eine SIM-Karte zur Verfügung gestellt werden. Es kann aber auch vorgesehen sein, dass zwei SIM-Felder derselben SIM-Karte genutzt werden, wie dies z.B. von dem Produkt SuperSIM des Unternehmens NowGSM bekannt ist.

Die Mobilfunkeinheit 12 kann einen weiteren Anschluss für eine zusätzliche SIM-Karte 76 aufweisen. Der Hersteller des Kraftwagens 10 kann so einen Kommunikationsverbindung zwischen Steuergeräten des Kraftwagens 10 und z.B. einer fahrzeugexternen Servicestation für den Kraftwagen über das LTE-Modul 34 aufbauen, ohne dass dies auf Kosten des Kraftwagenbenutzers geht. Beispielsweise kann so ein Software-Update vom Kraftwagenhersteller in Steuergeräte des Kraftwagens 10 übertragen werden. Um die SIM-Karte 76 nutzen zu können, kann die Mobilfunkeinheit 12 einen Schalter 78 aufweisen, der über eine (nicht dargestellte) Steuerlogik des Kraftwagens 10 umgeschaltet wird.

Bei einer zukünftigen Implementierung von LTE im Fahrzeug wird erfahrungsgemäß mit technischen Schwierigkeiten zu rechnen sein, sodass es wünschenswert ist, eine redundante Lösung oder eine Fallback-Lösung zu haben. Durch das Beispiel ist gezeigt, wie in einer Mobilfunkeinheit, insbesondere auf einer einzigen Einsteckkarte, sowohl ein LTE- als auch ein GSM-Modul angeordnet werden können. Beide Module teilen sich zwei Antennen. Eine Antenne hat bessere Empfangseigenschaften als die andere Antenne. Bedarfsweise wird die Antenne mit den besseren Empfangseigenschaften mit dem LTE- oder dem GSM-Modul zugeschaltet. Beispielsweise kann während eines Telefonats die Antenne mit den besseren Empfangseigenschaften dem GSM-Modul zugeschaltet werden. Vorzugsweise steuert das GSM-Modul die Umschaltlogik der Antennen, also die Schalteinrichtung.

Das LTE-Modul kann über Steuerleitungen, die ebenfalls mittels des USB-Standards betrieben werden können, mit einem nicht auf der Einsteckkarte befindlichen Steuerprozessor eines Steuergeräts verbunden sein. Die Steuerung für das GSM-Modul wird durch das LTE-Modul mittels der Durchleiteinrichtung durchgeschleift und/oder bei Bedarf von dem LTE-Modul noch entsprechend beeinflusst. Genauso kann das LTE-Modul über einen digitalen Audioanschluss mit dem nicht auf dem Einsteckmodul befindlichen Signalprozessor verbunden sein. Audiosignale für das GSM-Modul werden dann durch das LTE-Modul durchgeschleift oder von diesem bei Bedarf noch entsprechend beeinflusst.

Für den Anschluss der Einsteckkarte sind weniger Signalleitungen nötig, als es bei einer herkömmlichen Anbindung zweier Mobilfunkmodule notwendig wäre. Zudem muss der Steuerprozessor des Steuergeräts nicht die Rechenlast für eine Steuerung von zwei Mobilfunkmodulen tragen. Die Rechenlast für die Steuerung des GSM-Moduls ist auf das LTE-Modul verlagert.

## Patentansprüche

1. Schaltungsanordnung für eine Mobilfunkeinheit (12) eines Kraftwagens (10), umfassend:
- ein erstes Mobilfunkmodul (34) für eine Mobilfunkübertragung gemäß zumindest einem ersten Mobilfunkstandard, wobei das erste Mobilfunkmodul (34) ein UMTS-Modul oder UMTS/GSM-Modul oder ein LTE/UMTS/GSM-Modul oder ein LTE-Modul ist, und
- ein zweites Mobilfunkmodul (36) für eine Mobilfunkübertragung gemäß einem zweiten Mobilfunkstandard,
wobei das erste Mobilfunkmodul (34) eine Kommunikationsschnittstelle (60) zum Austauschen von Steuer- und Nutzdaten aufweist, die mit einem elektrischen Anschluss (30) zum elektrischen Verbinden der Schaltungsanordnung mit einer externen Prozessoreinheit (14) verbunden ist, und wobei das erste Mobilfunkmodul (34) eine Zusatzschnittstelle (70) aufweist, über welche das erste Mobilfunkmodul (34) mit einer zum Austauschen von Steuer- und Nutzdaten ausgelegten Kommunikationsschnittstelle (62) des zweiten Mobilfunkmoduls (34) elektrisch verbunden ist, und es der externen Prozessoreinheit (14) nur möglich ist, indirekt über das erste Mobilfunkmodul mit dem zweiten Mobilfunkmodul zu kommunizieren,
**dadurch gekennzeichnet, dass**
die Schaltungsanordnung einen Hauptantennenanschluss (48) zum Anschließen einer Hauptantenne (18) und einen Nebenantennenanschluss (50) zum Anschließen einer Zusatzantenne (20) aufweist und eine Schalteinrichtung (46) der Schaltungsanordnung dazu ausgelegt ist, in einem ersten Schaltzustand das erste Mobilfunkmodul (34) mit dem Hauptantennenanschluss (48) und das zweite Mobilfunkmodul (36) mit dem Nebenantennenanschluss (50) und in einem zweiten Schaltzustand das erste Mobilfunkmodul mit dem Nebenantennenanschluss (50) und das zweite Mobilfunkmodul mit dem Hauptantennenanschluss (48) für eine Funksignalübertragung zu koppeln.

2. Schaltungsanordnung nach Anspruch 1, wobei das erste Mobilfunkmodul (34) eine Durchleiteinrichtung (72) aufweist, die dazu ausgelegt ist, wahlweise ein Signal zwischen seiner Kommunikationsschnittstelle (60) und seiner Zusatzschnittstelle (70) durchzuleiten.

3. Schaltungsanordnung nach Anspruch 2, wobei die Kommunikationsschnittstelle (60, 62) des ersten und des zweiten Mobilfunkmoduls jeweils einen Audioanschluss zum Senden und/oder Empfangen eines Audiosignals umfasst und die Umleiteinrichtung (72) dazu ausgelegt ist, ein Audiosignal zwischen den die Audioanschlüssen zu übertragen.

4. Schaltungsanordnung nach einem der vorhergehenden Ansprüche, wobei das erste Mobilfunkmodul (34) eine Steuereinrichtung (74) aufweist, die dazu eingerichtet ist, Steuerbefehle zum Steuern des zweiten Mobilfunkmoduls (36) zu erzeugen und über die Zusatzschnittstelle (70) an das zweite Mobilfunkmodul (36) zu übertragen.

5. Schaltungsanordnung nach einem der vorhergehenden Ansprüche, wobei das erste Mobilfunkmodul (34) dazu ausgelegt ist, über einen Anschluss (54) der Kommunikationsschnittstelle Identifikationsdaten eines Benutzers von einem SIM seriell zu empfangen.

6. Schaltungsanordnung nach einem der vorhergehenden Ansprüche, wobei das zweite Mobilfunkmodul (36) ein GSM-Modul ist.

7. Schaltungsanordnung nach einem der vorhergehenden Ansprüche, wobei die beiden Mobilfunkmodule (34, 36) auf einer gemeinsamen Einsteckkarte (28) angeordnet sind.

8. Kraftwagen (10) mit einer Mobilfunkeinheit (12), die eine Schaltungsanordnung nach einem der vorhergehenden Ansprüche aufweist.

9. Kraftwagen (10) nach Anspruch 8, wobei ein für einen Datenaustausch mit einem Mobilfunknetzwerk eingerichteter Steuerprozessor (14) des Kraftwagens (10) über den elektrischen Anschluss (30) mit der Kommunikationsschnittstelle (60) des ersten Mobilfunkmoduls (34) gekoppelt ist.

10. Verfahren zum Betreiben einer Schaltungsanordnung nach einem der Ansprüche 1 bis 7, mit den Schritten:
- Empfangen eines Steuerbefehls durch das erste Mobilfunkmodul (34) an seiner Kommunikationsschnittstelle (60),
- Untersuchen des empfangenen Steuerbefehls durch das erste Mobilfunkmodul (34) daraufhin, ob er für das erste oder das zweite Mobilfunkmodul (34, 36) bestimmt ist, und im zweiten Fall Ansteuern des zweiten Mobilfunkmoduls (36) über die Zusatzschnittstelle (70) durch das erste Mobilfunkmodul (34) gemäß dem empfangenen Steuerbefehl,
**dadurch gekennzeichnet, dass**
die Schaltungsanordnung einen Hauptantennenanschluss (48) zum Anschließen einer Hauptantenne (18) und einen Nebenantennenanschluss (50) zum Anschließen einer Zusatzantenne (20) aufweist und eine Schalteinrichtung (46) der Schaltungsanordnung in einem ersten Schaltzustand das erste Mobilfunkmodul (34) mit dem Hauptantennenanschluss (48) und das zweite Mobilfunkmodul (36) mit dem Nebenantennenanschluss (50) und in einem zweiten Schaltzustand das erste Mobilfunkmodul mit dem Nebenantennenanschluss (50) und das zweite Mobilfunkmodul mit dem Hauptantennenanschluss (48) für eine Funksignalübertragung koppelt.

11. Verfahren nach Anspruch 10, mit den Schritten:
- Empfangen von Nutzdaten durch das erste Mobilfunkmodul (34) an seiner Kommunikationsschnittstelle (60) oder an seiner Zusatzschnittstelle (70),
- Übertragen der empfangenen Nutzdaten an die jeweils andere Schnittstelle (60, 70) durch das erste Mobilfunkmodul (34).

## Claims

1. Circuit arrangement for a mobile radio unit (12) of a motor vehicle (10), comprising:
- a first mobile radio module (34) for a mobile radio transmission according to at least one first mobile radio standard, wherein the first mobile radio module (34) is a UMTS module or UMTS/GSM module or an LTE/UMTS/GSM module or an LTE module, and
- a second mobile radio module (36) for a mobile radio transmission according to a second mobile radio standard,
wherein the first mobile radio module (34) comprises a communication interface (60) for interchanging control and useful data which is connected to an electrical connection (30) for electrically connecting the circuit arrangement to an external processor unit (14), and wherein
the first mobile radio module (34) comprises an additional interface (70) via which the first mobile radio module (34) is electrically connected to a communication interface (62) of the second mobile radio module (34) that is configured to interchange control and useful data, and the external processor unit (14) can only communicate indirectly via the first mobile radio module with the second mobile radio module,
**characterised in that**
the circuit arrangement comprises a main antenna connection (48) to connect a main antenna (18) and a secondary antenna connection (50) to connect an additional antenna (20) and a switching device (46) of the circuit arrangement is configured to couple the first mobile radio module (34) to the main antenna connection (48) and the second mobile radio module (36) to the secondary antenna connection (50) in a first switching state and to couple the first mobile radio module to the secondary antenna connection (50) and the second mobile radio module to the main antenna connection (48) in a second switching state, for radio signal transmission.

2. Circuit arrangement according to claim 1, wherein the first mobile radio module (34) comprises a transfer device (72) which is configured to selectively transfer a signal between its communication interface (60) and its additional interface (70).

3. Circuit arrangement according to claim 2, wherein the communication interface (60, 62) of the first and second mobile radio module each comprises an audio connection for transmitting and/or receiving an audio signal and the transfer device (72) is configured to transmit an audio signal between the audio connections.

4. Circuit arrangement according to any of the preceding claims, wherein the first mobile radio module (34) comprises a control device (74) which is configured to generate control commands to control the second mobile radio module (36) and to transmit the control commands via the additional interface (70) to the second mobile radio module (36).

5. Circuit arrangement according to any of the preceding claims, wherein the first mobile radio module (34) is configured to serially receive from a SIM identification data relating to a user via a connection (54) of the communication interface.

6. Circuit arrangement according to any of the preceding claims, wherein the second mobile radio module (36) is a GSM module.

7. Circuit arrangement according to any of the preceding claims, wherein the two mobile radio modules (34, 36) are arranged on a common plug-in card (28).

8. Motor vehicle (10) with a mobile radio unit (12) comprising a circuit arrangement according to any of the preceding claims.

9. Motor vehicle (10) according to claim 8, wherein a control processor (14) of the motor vehicle (10) which configured to interchange data with a mobile radio network is coupled via the electrical connection (30) to the communication interface (60) of the first mobile radio module (34).

10. Method for operating a circuit arrangement according to any of claims 1 to 7, comprising the steps of:
- receiving a control command by the first mobile radio module (34) at its communication interface (60)
- examining the received control command by the first mobile radio module (34) to determine whether the control command is intended for the first or the second mobile radio module (34, 36) and, in the latter case, controlling the second mobile radio module (36) by the first mobile radio module (34) via the additional interface (70) according to the received control command,
**characterised in that**
the circuit arrangement comprises a main antenna connection (48) to connect a main antenna (18) and a secondary antenna connection (50) to connect an additional antenna (20) and a switching device (46) of the circuit arrangement couples the first mobile radio module (34) to the main antenna connection (48) and the second mobile radio module (36) to the secondary antenna connection (50) in a first switching state and couples the first mobile radio module to the secondary antenna connection (50) and the second mobile radio module to the main antenna connection (48) in a second switching state, for radio signal transmission.

11. Method according to claim 10, with the steps:
- receiving useful data by the first mobile radio module (34) at its communication interface (60) or at its secondary interface (70),
- transmitting the received useful data by the first mobile radio module (34) to the other of the interfaces (60, 70).

## Revendications

1. Circuit pour une unité de radiocommunication mobile (12) d'un véhicule automobile (10), comprenant :
- un premier module de radiocommunication mobile (34) pour une transmission de radiocommunication mobile selon au moins un premier standard de radiocommunication mobile, lequel premier module de radiocommunication mobile (34) est un module UMTS ou un module UMTS/GSM ou un module LTE/UMTS/GSM ou un module LTE, et
- un second module de radiocommunication mobile (36) pour une transmission de radiocommunication mobile selon un second standard de radiocommunication mobile,
dans lequel le premier module de radiocommunication mobile (34) comporte une interface de communication (60) qui est destinée à échanger des données de commande et des données utiles et qui est reliée à un raccordement électrique (30) pour la liaison électrique du circuit avec une unité de processeur externe (14)
et dans lequel le premier module de radiocommunication mobile (34) comporte une interface supplémentaire (70) par l'intermédiaire de laquelle le premier module de radiocommunication mobile (34) est relié électriquement à une interface de communication (62), conçue pour échanger des données de commande et des données utiles, du second module de radiocommunication mobile (34) et il n'est possible à l'unité de processeur externe (14) de ne communiquer avec le second module de radiocommunication mobile qu'indirectement par l'intermédiaire du premier module de radiocommunication mobile,
**caractérisé en ce que** le circuit comporte un raccordement d'antenne principale (48) destiné à raccorder une antenne principale (18) et un raccordement d'antenne secondaire (50) destiné à raccorder une antenne supplémentaire (20) et **en ce qu'**un commutateur (46) du circuit est conçu pour connecter dans un premier état de commutation le premier module de radiocommunication mobile (34) au raccordement d'antenne principale (48) et le second module de radiocommunication mobile (36) au raccordement d'antenne secondaire (50) et dans un second état de commutation le premier module de radiocommunication mobile au raccordement d'antenne secondaire (50) et le second module de radiocommunication mobile au raccordement d'antenne principale (48) en vue d'une transmission de signal radio.

2. Circuit selon la revendication 1, dans lequel le premier module de radiocommunication mobile (34) comporte un dispositif de transfert (72) qui est conçu pour transférer au choix un signal entre son interface de communication (60) et son interface supplémentaire (70).

3. Circuit selon la revendication 2, dans lequel l'interface de communication (60, 62) du premier et du second module de radiocommunication mobile comprend à chaque fois un raccordement audio destiné à émettre et/ou recevoir un signal audio et le dispositif de déviation (72) est conçu pour transmettre un signal audio entre les raccordements audio.

4. Circuit selon l'une quelconque des revendications précédentes, dans lequel le premier module de radiocommunication mobile (34) comporte un dispositif de commande (74) qui est équipé pour produire des instructions de commande destinées à commander le second module de radiocommunication mobile (36) et pour les transmettre au second module de radiocommunication mobile (36) par l'intermédiaire de l'interface supplémentaire (70).

5. Circuit selon l'une quelconque des revendications précédentes, dans lequel le premier module de radiocommunication mobile (34) est conçu pour recevoir d'une SIM, en série et par l'intermédiaire d'un raccordement (54) de l'interface de communication, des données d'identification d'un utilisateur.

6. Circuit selon l'une quelconque des revendications précédentes, dans lequel le second module de radiocommunication mobile (36) est un module GSM.

7. Circuit selon l'une quelconque des revendications précédentes, dans lequel les deux modules de radiocommunication mobile (34, 36) sont agencés sur une carte à enficher (28) commune.

8. Véhicule automobile (10) avec une unité de radiocommunication mobile (12) qui comporte un circuit selon l'une quelconque des revendications précédentes.

9. Véhicule automobile (10) selon la revendication 8, dans lequel un processeur de commande (14), équipé pour un échange de données avec un réseau de radiocommunication mobile, du véhicule automobile (10) est connecté à l'interface de communication (60) du premier module de radiocommunication mobile (34) par l'intermédiaire du raccordement électrique (30).

10. Procédé de fonctionnement d'un circuit selon l'une quelconque des revendications 1 à 7, avec les étapes :
- réception d'une instruction de commande par le premier module de radiocommunication mobile (34) au niveau de son interface de communication (60),
- analyse de l'instruction de commande reçue par le premier module de radiocommunication mobile (34) pour savoir si elle est destinée au premier ou au second module de radiocommunication mobile (34, 36) et, dans le second cas, commande du second module de radiocommunication mobile (36) par l'intermédiaire de l'interface supplémentaire (70) par le premier module de radiocommunication mobile (34) selon l'instruction de commande reçue,
**caractérisé en ce que** le circuit comporte un raccordement d'antenne principale (48) destiné à raccorder une antenne principale (18) et un raccordement d'antenne secondaire (50) destiné à raccorder une antenne supplémentaire (20) et **en ce qu'**un commutateur (46) du circuit est conçu pour connecter dans un premier état de commutation le premier module de radiocommunication mobile (34) au raccordement d'antenne principale (48) et le second module de radiocommunication mobile (36) au raccordement d'antenne secondaire (50) et dans un second état de commutation le premier module de radiocommunication mobile au raccordement d'antenne secondaire (50) et le second module de radiocommunication mobile au raccordement d'antenne principale (48) en vue d'une transmission de signal radio.

11. Procédé selon la revendication 10, avec les étapes :
- réception de données utiles par le premier module de radiocommunication mobile (34) au niveau de son interface de communication (60) ou au niveau de son interface supplémentaire (70),
- transmission des données utiles reçues à l'autre interface respective (60, 70) par le premier module de radiocommunication mobile (34).
